# EUROPÄISCHE PATENTSCHRIFT

(11) **EP 2 597 417 B1**
(45) Veröffentlichungstag und Bekanntmachung des Hinweises auf die Patenterteilung: **04.09.2019**
(21) Anmeldenummer: 12007320.0
(22) Anmeldetag: 25.10.2012
(51) Int. Cl.: G01B 5/00, G01B 7/12, G01B 7/16, G01B 1/00, G01B 3/24

(54) **Messvorrichtung und Messverfahren zur Prüfung der Maßhaltigkeit eines Werkstücks**
Measuring device and method for testing the dimensional stability of a workpiece
Dispositif de mesure et procédé de mesure destinés à contrôler le respect des cotes d'une pièce à usiner

(30) Priorität: 26.11.2011 DE 102011119580
(43) Veröffentlichungstag der Anmeldung: 29.05.2013
(73) Patentinhaber: ZF Friedrichshafen AG, 88046 Friedrichshafen (DE)
(72) Erfinder: Feyri, Dieter, 90547 Stein (DE)
(74) Vertreter: Wiesmann, Stephan

(56) Entgegenhaltungen:
- CN-A- 102 032 850
- GB-A- 2 338 067
- US-A1- 2011 113 640
- US-B1- 6 668 466

## Beschreibung

Die Erfindung betrifft eine Messvorrichtung und ein Messverfahren zur Prüfung der Maßhaltigkeit eines Werkstücks, wobei das Werkstück vorzugsweise einen Außen- und/oder Innendurchmesser aufweist, dessen Maßhaltigkeit es zu prüfen bzw. zu messen gilt.

Eine Messvorrichtung der vorstehend genannten Art ist beispielsweise aus der WO 90/00246 A1 bekannt. Sie dient insbesondere der quantitativen Vermessung von Eisenbahnwagenachsen bzw. der Achsendurchmesser, um bei der Fertigung solcher Achsen etwaige Toleranzüberschreitungen feststellen zu können. Die hierzu eingesetzte Vorrichtung weist einen bogenförmigen Rahmen auf, welcher derart um den Außendurchmesser einer Achse legbar ist, dass er an drei Kontaktpunkten anliegt. Die Kontaktpunkte werden durch Schuhe gebildet, welche am Rahmen befestigt sind. Wenigstens ein Schuh ist nicht lagefest am Rahmen befestigt und ein weiterer ist verstellbar, um eine Voreinstellung vornehmen zu können. Des Weiteren weist die Vorrichtung einen ersten Temperatursensor zur Erfassung der Temperatur des Werkstücks sowie einen zweiten Temperatursensor zur Erfassung der Temperatur der Messvorrichtung, insbesondere des Rahmens auf. Denn in Abhängigkeit von der Temperatur und dem Ausdehnungskoeffizienten des jeweils verwendeten Werkstoffs können sich die Abmessungen des Werkstücks wie auch der Messvorrichtung verändern und demzufolge zu einem wenig aussagekräftigen Messergebnis führen. Die Messergebnisse können demnach in Abhängigkeit von der jeweiligen Umgebungs-, Werkstücks- und/oder Messvorrichtungstemperatur stark streuen.

Bei der Messvorrichtung der WO 90/00246 A1 werden die über die Temperatursensoren erfassten Temperaturen bei der Vermessung berücksichtigt, indem die gemessenen Werte unter Berücksichtigung der jeweiligen Ausdehnungskoeffizienten der Werkstoffe in Beziehung zu Werten gesetzt werden, die bei einer Standard-Bezugstemperatur vorliegen. Um eine entsprechende Auswertung vorzunehmen, sind die Temperatursensoren über Leitungen mit einem Computer verbunden, der vorzugsweise an der Vorrichtung selbst angeordnet ist. Die beschriebene Vorrichtung soll auf diese Weise die Ermittlung der temperaturnormalisierten Abmessungen eines Gegenstandes ermöglichen.

Um festzustellen, ob zwei Gegenstände, beispielsweise eine Radachse und ein zur Aufnahme der Radachse vorgesehenes Lager. hinsichtlich ihrer Durchmesser zueinander passen, schlägt die WO 90/00246 A1 ferner eine Vorrichtung zur Bestimmung eines Innendurchmessers vor. Diese weist anstelle eines bogenförmigen Rahmens eine scheibenförmige Basis mit außenumfangseitig angeordneten Schuhen auf, so dass diese in Anlage mit einer Innenumfangsfläche eines Werkstücks bringbar sind.

Eine Messvorrichtung zur Abstandsmessung ist ferner aus der US 2011/0113640 A1 bekannt. Die Messvorrichtung umfasst zwei an einem länglichen Tragelement befestigte Stützelemente, deren Abstand zueinander veränderbar ist. indem ein Stützelement verschoben wird. Das Maß der Verschiebung entspricht einer Maßabweichung, die über eine Messeinheit erfassbar ist. Eine ähnliche Messvorrichtung, die insbesondere der Messung von Durchmessern dient, ist aus der GB 2 338 067 A bekannt. Eine weitere Messvorrichtung geht aus der US 6.668,466 B1 hervor. Eine weitere Messvorrichtung ist ferner aus der CN 102032850 A bekannt.

Ausgehend von dem vorstehend genannten Stand liegt der vorliegenden Erfindung die Aufgabe zugrunde, eine Messvorrichtung sowie ein Messverfahren zur Prüfung der Maßhaltigkeit von Werkstücken anzugeben, welche einfach zu handhaben bzw. anzuwenden sind und zugleich zu verlässlichen Ergebnissen führen.

Diese Aufgabe wird gelöst zum Einen durch eine Messvorrichtung mit den Merkmalen des Anspruchs 1, zum Anderen durch ein Messverfahren mit den Merkmalen des Anspruchs 7.

Vorteilhafte Weiterbildungen der Erfindung sind jeweils in den Unteransprüchen angegeben.

Die zur Prüfung der Maßhaltigkeit eines Werkstücks vorgeschlagene Messvorrichtung umfasst ein Trägerelement sowie wenigstens zwei zueinander in einem Abstand auf dem Trägerelement angeordnete Stützelemente, wobei der Abstand der Stützelemente zueinander zur Einstellung einer Referenzlänge veränderbar ist. Ferner umfasst die Messvorrichtung eine Messeinheit zur Erfassung einer Abweichung eines Längenmaßes des Werkstücks von einer voreingestellten Referenzlänge. Zumindest ein Teil des Trägerelementes ist aus einem Kohlenstofffaserverstärkten Kunststoff gefertigt. Gegenstände aus Kohlenstofffaserverstärktem Kunststoff weisen den Vorteil auf, dass sich ihre Abmessungen bei Temperaturschwankungen nur unwesentlich verändern. Dies ist auf einen Ausdehnungskoeffizienten des Kohlenstofffaserverstärkten Kunststoffs zurückzuführen, der annähernd Null ist. Weitere Vorteile des Werkstoffs sind darin zu sehen, dass er aufgrund der Faserverstärkung eine hohe mechanische Festigkeit besitzt und zugleich ein geringes Gewicht besitzt.

Die Vorteile des Werkstoffs übertragen sich auf das hieraus gefertigte Teil bzw. Trägerelement, so dass sich dieses durch eine geringe Temperatursensibilität, eine hohe mechanische Festigkeit und ein geringes Gewicht auszeichnet. Da das Trägerelement der Einstellung des Abstands der Stützelemente zueinander dient, hat dies zur Folge, dass der einmal eingestellte Abstand - unabhängig von der jeweiligen Umgebungstemperatur - weitgehend konstant bleibt. Denn aufgrund der Werkstoffwahl sind die thermisch bedingten Längenänderungen des Trägerelementes vemachlässigbar gering. Ferner ermöglicht die hohe mechanische Festigkeit des Trägerelementes die Einstellung besonders großer Abstände der Stützelemente zueinander, ohne dass die Gefahr einer Verformung. insbesondere Durchbiegung des Trägerelementes besteht. Ein gleichbleibender voreingestellter Abstand ist demnach selbst bei großen zu überbrückenden Distanzen gewährleistet. Durch das geringe Gewicht wiederum wird die Handhabung der Messvorrichtung vereinfacht.

Des Weiteren erfindungsgemäß weisen die Stützelemente Auflageelemente auf, weiche stiftförmig ausgebildet. Erfindungsgemäß weisen die Stützelemente Auflageelemente auf, welche stiftförmig sind und paarweise in paralleler Ausrichtung zur Längsachse des Trägerelementes an zumindest einem Stützelement angeordnet sind, wobei die Auflageelemente ausgebildet sind, auf einer ebenen Stirnfläche des Werkstücks aufzuliegen, wenn die Messvorrichtung auf das Werkstück aufgesetzt wird, und wobei zumindest ein Stützelement ein an eine Außen- oder Innenumfangsfläche des Werkstücks anlegbares Kontaktelement aufweist, das zur punktuellen Kontaktierung des Werkstücks ausgebildet ist. Die stiftförmigen Auflageelemente ermöglichen eine Auflage der Messvorrichtung auf einer Stirnfläche des Werkstücks.

Die vorstehend genannten Vorteile führen jeweils allein, wie auch in Kombination dazu, dass die Messgenauigkeit erhöht und ein verlässliches Prüfergebnis erzielt wird.

Gemäß einer bevorzugten Ausführungsform der Erfindung ist das aus Kohlenstofffaserverstärktem Kunststoff gefertigte Teil des Trägerelementes rohrförmig ausgebildet. Durch die Rohrform wird die mechanische Festigkeit, insbesondere Steifigkeit. des Trägerelementes erhöht. Zugleich kann im Vergleich zu einem Vollprofil das Gewicht weiter reduziert werden. Bei dem aus Kohlenstofffaserverstärktem Kunststoff gefertigten Teil handelt es sich vorzugsweise um den distanzüberbrückenden und damit tragenden Teil des Trägerelementes, so dass sich eine verbesserte mechanische Festigkeit dieses Teils positiv auf die Steifigkeit und damit Stabilität der Messvorrichtung auswirkt, um die gewünschte hohe Messgenauigkeit zu erzielen.

Als besonders vorteilhaft wird ein Kohlenstofffaserverstärkter Kunststoff angesehen, der sich kreuzende und/oder in mehreren Lagen angeordnete Kohlenstofffasern aufweist. Die Orientierung der Fasern sollte im Wesentlichen der Belastungsrichtung entsprechen, da Fasern in der Regel in Faserrichtung tragen. Durch sich kreuzende und/oder in mehreren Lagen angeordnete Fasern kann der verstärkende Effekt der Fasern weiter erhöht werden.

Die Stützelemente sind vorzugsweise aus Metall, insbesondere einem Leichtmetall wie beispielsweise Aluminium, hergestellt. Es kann aber auch ein Kunststoff verwendet werden.

Weiterhin bevorzugt ist zumindest ein auf dem Trägerelement angeordnetes Stützelement entlang einer Längsachse des Trägerelementes verschiebbar. Über eine Verschiebung des Stützelementes entlang der Längsachse des Trägerelementes ist der Abstand des Stützelementes zu wenigstens einem weiteren Stützelement einstellbar. Zur axialen Verschiebung des Stützelementes kann am Trägerelement eine Führung vorgesehen sein oder das Trägerelement selbst als Führung dienen.

Des Weiteren wird vorgeschlagen, dass zumindest ein auf dem Trägerelement angeordnetes Stützelement ein an das Werkstück anlegbares Kontaktelement aufweist, das zur punktuellen Kontaktierung des Werkstücks vorzugsweise stift-, kugel- oder teilkugelförmig ausgebildet ist. Das an das Werkstück anlegbare Kontaktelement vereinfacht die Handhabung der Messvorrichtung, da - wie nachfolgend anhand des erfindungsgemäßen Messverfahrens noch aufgezeigt werden wird - das Kontaktelement die Ausrichtung der Messvorrichtung erleichtert. Erfolgt die Messung zudem unter Anwendung eines MehrPunkt-Tastverfahrens, verhindert eine punktuelle Kontaktierung eine Zwängung der Messvorrichtung, wenn diese mehrere Kontaktstellen mit dem Werkstück aufweist.

Bevorzugt ist ein an das Werkstück anlegbares weiteres Kontaktelement Bestandteil der Messeinheit der Messvorrichtung. Das weitere Kontaktelement der Messeinheit ermöglicht die Erfassung einer Abweichung von der voreingestellten Referenzlänge. Hierzu ist das weitere Kontaktelement bevorzugt an einem beweglich gelagerten Stift der Messeinheit ausgebildet. Die Messeinheit, vorzugsweise eine Messuhr, kann fest oder lösbar mit einem Stützelement verbunden sein. Bei einer lösbaren Verbindung ist an dem Stützelement eine Aufnahme für die Messeinheit vorzusehen. Eine lösbare Verbindung weist den Vorteil auf, dass die Messeinheit ausgetauscht oder zusammen mit einer anderen Messvorrichtung verwendet werden kann.

Gemäß der Erfindung sind die Auflageelemente paarweise in paralleler Ausrichtung zur Längsachse A des Trägerelementes an einem Stützelement angeordnet. Sie sollen eine planebene Auflage der Messvorrichtung auf einer Stirnfläche des Werkstücks ermöglichen.

Sofern die Messvorrichtung der Prüfung der Maßhaltigkeit eines Außendurchmessers dient, sind die Auflageelemente bevorzugt auf den sich gegenüber liegenden Innenflächen zweier Stützelemente angeordnet. Der Abstand der Stützelemente zueinander ist dann geringfügig größer als der zu überprüfende Außendurchmesser gewählt, so dass die Stützflächen das Werkstück zu umgreifen vermögen. Im Fall, dass die Messvorrichtung der Prüfung der Maßhaltigkeit eines Innendurchmessers dient, sind die Auflageelemente bevorzugt an den voneinander abgewandten Außenflächen zweier Stützelemente angeordnet und der Abstand der Stützelemente ist geringfügig kleiner als der zu überprüfende Innendurchmesser gewählt, so dass die Stützelemente in den Innendurchmesser einzugreifen vermögen.

Um nach dem Auflegen der Messvorrichtung auf das Werkstück die Kontaktelemente der Stützelemente an den Außen- bzw. Innendurchmesser des Werkstücks anlegen zu können, weisen die Kontaktelemente, die sich im Übrigen auf derselben Außen- bzw. Innenfläche wie die Auflageelemente befinden, bevorzugt einen größeren radialen Abstand bezogen auf die Längsachse des Trägerelementes als die Auflageelemente auf.

Sofern die Stützelemente lösbar am Trägerelement befestigt sind, können diese abgenommen und vorzugsweise umgekehrt wieder aufgesetzt werden, um die Prüfung von Außen- wie auch Innendurchmessern mit einer Messvorrichtung zu ermöglichen.

Vorteilhafterweise ist an dem Trägerelement der Messvorrichtung ein Haltegriff ausgebildet Dadurch wird die Handhabung der Messvorrichtung weiter vereinfacht. Insbesondere wird eine tragbare Messvorrichtung geschaffen. Ferner werden äußere Einwirkungen von der Messvorrichtung fern gehalten, wenn diese ausschließlich am Haltegriff gefasst wird. Der Haltegriff kann fest oder lösbar mit dem Trägerelement verbunden sein. Eine lösbare Verbindung ermöglicht die Ausrichtung des Haltegriffes auf die Mitte des Abstandes der Stützelemente zueinander, so dass die Messvorrichtung beim Tragen weitgehend ausbalanciert ist.

Die vorstehend genannten Vorteile kommen insbesondere bei der Prüfung der Maßhaltigkeit von Außen- oder Innendurchmessern zylinder- oder hohlzylinderförmiger Werkstücke zum Tragen. Daher wird ferner die Verwendung einer erfindungsgemäßen Messvorrichtung zur Prüfung der Maßhaltigkeit eines Außen- oder Innendurchmessers eines zylinder- oder hohlzylinderförmigen Werkstücks vorgeschlagen. Die aufgrund des gewählten Werkstoffs hohe Steifigkeit zumindest eines Teils des Trägerelementes der Messvorrichtung macht diese besonders geeignet zur Prüfung bzw. Messung großer Durchmesser. Vorzugsweise werden Durchmesser zwischen 350 mm und 3500 mm geprüft bzw. gemessen, weiterhin vorzugsweise beträgt der zu prüfende bzw. messende Außen- oder Innendurchmesser zwischen 400 mm und 3000 mm. Werkstücke mit entsprechenden Durchmessern finden sich insbesondere in der Getriebetechnik. Beispielhaft seien hier Getriebeteile einer Windkraftanlage genannt.

Das zur Prüfung der Maßhaltigkeit eines zylinder- oder hohlzylinderförmigen Werkstücks vorgeschlagene Messverfahren unter Verwendung einer erfindungsgemäßen Messvorrichtung umfasst die folgenden Schritte:
- Aufsetzen der Messvorrichtung auf das Werkstück, so dass die Auflageelemente der Stützelemente auf einer ebenen Stirnfläche des Werkstücks aufliegen,
- Anlegen eines Kontaktelementes eines Stützelementes an eine Außen- oder Innenumfangsfläche des Werkstücks durch Verschieben der Messvorrichtung in der Auflageebene,
- Ausrichten der Längsachse des Trägerelementes auf den Außen- oder Innendurchmesser des Werkstücks durch Verschwenken der Messvorrichtung innerhalb der Auflageebene um den angelegten Kontaktpunkt bis die Längsachse des Trägerelementes in Überdeckung mit dem Außen- oder Innendurchmesser des Werkstücks gebracht ist,
- Erfassen einer Abweichung des Außen- oder Innendurchmessers von einer voreingestellten Referenzlänge mittels der Messeinheit.

Um die Längsachse des Trägerelementes der Messvorrichtung in Überdeckung mit dem Außen- bzw. Innendurchmesser des Werkstücks zu bringen, wird beim Verschwenken der Vorrichtung innerhalb der Auflageebene um den fest anliegenden Kontaktpunkt der Umkehrpunkt gesucht, das heißt das maximale Ist-Maß. Ist der Umkehrpunkt gefunden und die Messvorrichtung in Überdeckung mit dem Durchmesser gebracht, kann gemessen werden. Abweichungen vom Soll-Maß können sich als Über- oder Untermaß darstellen. Die Messung wird zur Erhöhung der Genauigkeit über Kreuz wiederholt. Das heißt, dass die Messvorrichtung um 90° gedreht und neu ausgerichtet wird bevor erneut gemessen wird. Die einfache Handhabung der Vorrichtung ermöglicht eine kurze Messzeit von etwa 1 Minute.

Weiterhin bevorzugt wird die Messeinheit der Messvorrichtung vor dem Messen auf eine Referenzlänge eingestellt. Die Voreinstellung erfolgt vorzugsweise auf einem so genannten Master.

Das Verfahren kann produktionsbegleitend eingesetzt werden, so dass Fertigungsfehler die zu einer Toleranzüberschreitung führen noch vor Ort korrigiert werden können. Ferner wird der Aufwand beim nachträglichen Messen des Werkstücks auf einer 3-D-Messvorrichtung verringert.

Des Weiteren haben örtlich bedingte Temperaturschwankungen in Abhängigkeit vom jeweiligen Einsatzbereich der Messvorrichtung so gut wie keine Auswirkungen auf die Messgenauigkeit der Vorrichtung bzw. des Verfahrens. Durch das geringe Gewicht ist die Messvorrichtung zudem leicht zu handhaben, wodurch die Messgenauigkeit weiter erhöht wird.

Bevorzugte Ausführungsformen der Erfindung sind den beigefügten Zeichnungen zu entnehmen. Diese zeigen:
- Figur 1: eine Seitenansicht einer ersten erfindungsgemäßen Messvorrichtung,
- Figur 2: eine Seitenansicht einer zweiten erfindungsgemäßen Messvorrichtung,
- Figur 3: eine gespiegelte vergrößerte Seitenansicht der Messvorrichtung der Fig. 1 und
- Figur 4: einen Querschnitt durch die Messvorrichtung der Fig. 1.

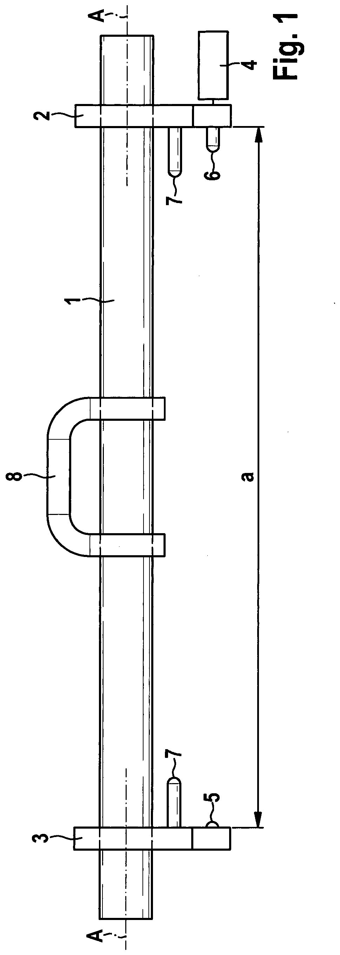

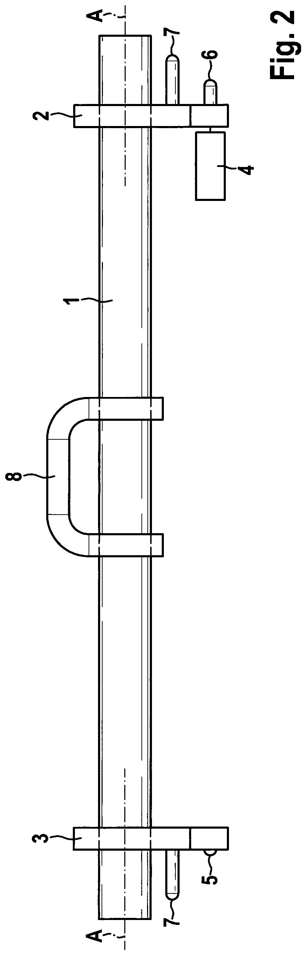

Die in den Figuren 1 und 2 dargestellten Messvorrichtungen umfassen jeweils ein rohrförmiges Trägerelement 1 aus einem Kohlenstofffaserverstärktem Kunststoff, nachfolgend Trägerrohr genannt, sowie zwei hierauf verschiebbar angeordnete Stützelemente 2, 3 aus Aluminium. Die Verschiebbarkeit der Stützelemente 2, 3 ermöglicht die Einstellung eines Abstandes a der Stützelemente 2, 3 zueinander, welche der Voreinstellung einer Referenzlänge dient. Zum Transport der Messvorrichtung ist in etwa mittig in Bezug auf die Länge des Trägerrohres ein Haltegriff 8 angeordnet.

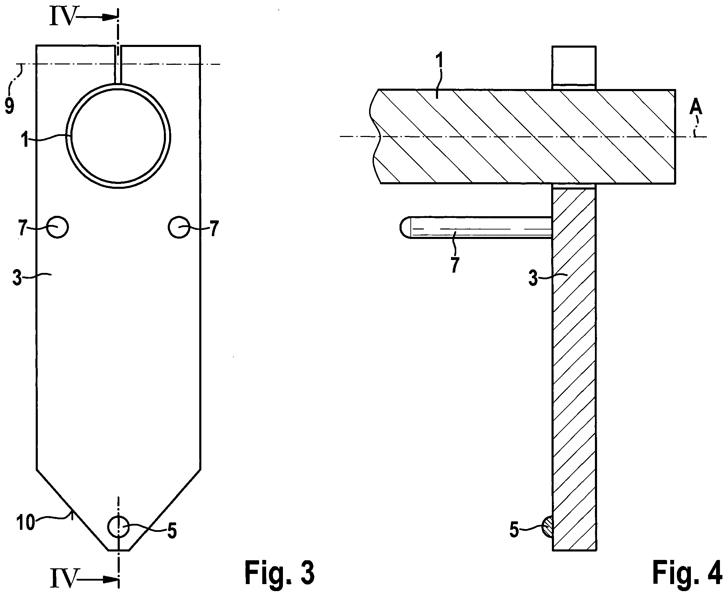

Die Stützelemente 2, 3 sind plattenförmig ausgebildet und weisen an ihren freien Enden schräge Einführflächen 10 auf (siehe Figuren 3 und 4). Die Einführschrägen begrenzen eine Außen- oder Innenwandfläche der Stützelemente 2, 3, welche mit einem Kontaktelement 5, 6 versehen sind, mit welchem die Messvorrichtung an eine Innen- oder Außenumfangsfläche eines Werkstücks (nicht dargestellt) anlegbar ist. Das Kontaktelement 5 ist teilkugelförmig ausgebildet und fest mit dem Stützelement 3 verbunden. Das Kontaktelement 6 ist stiftförmig ausgebildet und Bestandteil einer Messeinheit 4, welche mit dem Stützelement 2 lösbar verbunden ist. Das Kontaktelement 6 ist zudem ein- bzw. ausfahrbar, um eine Abweichung von der voreingestellten Referenzlänge ertasten zu können.

Zwischen den Kontaktelementen 5, 6 und dem Trägerrohr weisen die Stützelemente 2, 3 ferner stiftförmige Auflageelemente 7 auf, die zumindest an einem Stützelement 3 paarweise und parallel zur Längsachse A angeordnet sind. Das andere Stützelement 2 weist vorzugsweise nur ein Auflageelement 7 auf, um eine planebene Auflage der Messvorrichtung auf einer Stirnfläche des Werkstücks zu ermöglichen. Die Auflageelemente 7 sind auf derselben Außen- bzw. Innenfläche eines Stützelementes 2, 3 wie die Kontaktelemente 5, 6 angeordnet. Es handelt sich hierbei um die Außenfläche eines Stützelementes 2, 3, wenn die Vorrichtung - wie in der Figur 2 dargestellt - der Messung/Prüfung eines Innendurchmessers eines Werkstücks dient. Demgegenüber sind die Auflageelemente 7 und die Kontaktelemente 5, 6 an der Innenfläche eines Stützelementes 2, 3 angeordnet, wenn die Vorrichtung - wie in der Figur 1 dargestellt - der Messung/Prüfung eines Außendurchmessers eines Werkstücks dient.

Um eine Verschiebung der Stützelemente 2, 3 entlang der Längsachse A auf dem Trägerrohr zu erleichtern, weist der Durchmesser zur Aufnahme des Trägerrohrs eine Unterbrechung 11 in Form eines Schlitzes auf, welche ein geringfügiges Aufweiten des Durchmessers ermöglicht. Zur Fixierung der Stützelemente 2, 3 am Trägerrohr kann der Durchmesser mittels eines Spannmittels 9, vorliegend einer Schraube, die quer zum Schlitz geführt ist, derart verengt werden, dass eine kraftschlüssige Verbindung des Stützelementes 2, 3 mit dem Trägerelement 1 bewirkt wird.

### Bezugszeichenliste

- 1: Trägerelement
- 2: Stützelement
- 3: Stützelement
- 4: Messeinheit
- 5: Kontaktelement
- 6: Kontaktelement
- 7: Auflagerelement
- 8: Haltegriff
- 9: Spannmittel
- 10: Einführfläche
- 11: Unterbrechung

## Patentansprüche

1. Messvorrichtung zur Prüfung der Maßhaltigkeit eines Werkstücks umfassend ein Trägerelement (1) mit einer Längsachse (A) sowie wenigstens zwei zueinander in einem Abstand (a) auf dem Trägerelement (1) angeordnete Stützelemente (2, 3), wobei der Abstand (a) der Stützelemente (2, 3) zueinander zur Einstellung einer Referenzlänge veränderbar ist, ferner umfassend eine Messeinheit (4) zur Erfassung einer Abweichung eines Längenmaßes des Werkstücks von einer voreingestellten Referenzlänge, wobei zumindest ein Teil des Trägerelementes (1) aus einem Kohlenstofffaserverstärkten Kunststoff gefertigt ist; **dadurch gekennzeichnet, dass** die Stützelemente (2, 3) Auflageelemente (7) aufweisen, welche stiftförmig sind und paarweise in paralleler Ausrichtung zur Längsachse (A) des Trägerelementes (1) an zumindest einem Stützelement (2, 3) angeordnet sind; wobei
die Auflageelemente (7) ausgebildet sind, auf einer ebenen Stirnfläche des Werkstücks aufzuliegen, wenn die Messvorrichtung auf das Werkstück aufgesetzt wird; und wobei
zumindest ein Stützelement (2, 3) ein an eine Außen- oder Innenumfangsfläche des Werkstücks anlegbares Kontaktelement (5) aufweist, das zur punktuellen Kontaktierung des Werkstücks ausgebildet ist.

2. Messvorrichtung nach Anspruch 1,
**dadurch gekennzeichnet, dass** das aus Kohlenstofffaserverstärktem Kunststoff gefertigte Teil des Trägerelementes (1) rohrförmig ausgebildet ist.

3. Messvorrichtung nach Anspruch 1 oder 2,
**dadurch gekennzeichnet, dass** zumindest ein auf dem Trägerelement (1) angeordnetes Stützelement (2, 3) entlang einer Längsachse (A) des Trägerelementes (1) verschiebbar ist.

4. Messvorrichtung nach einem der vorhergehenden Ansprüche,
**dadurch gekennzeichnet, dass** ein an das Werkstück anlegbares weiteres Kontaktelement (6) Bestandteil der Messeinheit (4) ist, wobei die Messeinheit (4) vorzugsweise lösbar mit einem Stützelement (2) verbunden ist.

5. Messvorrichtung nach einem der vorhergehenden Ansprüche,
**dadurch gekennzeichnet, dass** an dem Trägerelement (1) ein Haltegriff (8) ausgebildet ist, der vorzugsweise lösbar mit dem Trägerelement (1) verbunden ist.

6. Verwendung einer Messvorrichtung nach einem der vorhergehenden Ansprüche zur Prüfung der Maßhaltigkeit eines Außen- oder Innendurchmessers eines zylinder- oder hohlzylinderförmigen Werkstücks, wobei der Außen- oder Innendurchmessers des Werkstücks vorzugsweise zwischen 350 mm und 3500 mm, weiterhin vorzugsweise zwischen 400 mm und 3000 mm beträgt.

7. Messverfahren zur Prüfung der Maßhaltigkeit eines zylinder- oder hohlzylinderförmigen Werkstücks unter Verwendung einer Messvorrichtung nach einem der Ansprüche 1 bis 5, wobei das Verfahren die folgenden Schritte umfasst:
- Aufsetzen der Messvorrichtung auf das Werkstück, so dass die Auflageelemente (7) der Stützelemente (2, 3) auf einer ebenen Stirnfläche des Werkstücks aufliegen,
- Anlegen eines Kontaktelementes (5) eines Stützelementes (2, 3) an eine Außen- oder Innenumfangsfläche des Werkstücks durch Verschieben der Messvorrichtung in der Auflageebene,
- Ausrichten der Längsachse (A) des Trägerelementes (1) auf den Außen- oder Innendurchmesser des Werkstücks durch Verschwenken der Messvorrichtung innerhalb der Auflageebene um den angelegten Kontaktpunkt bis die Längsachse (A) des Trägerelementes (1) in Überdeckung mit dem Außen- oder Innendurchmesser des Werkstücks gebracht ist,
- Erfassen einer Abweichung des Außen- oder Innendurchmesser von einer voreingestellten Referenzlänge mittels der Messeinheit.

8. Messverfahren nach Anspruch 7,
**dadurch gekennzeichnet, dass** die Messeinheit der Messvorrichtung zuvor auf eine Referenzlänge eingestellt wird.

## Claims

1. Measuring device for testing the dimensional stability of a workpiece, comprising a carrier element (1) with a longitudinal axis (A) and at least two supporting elements (2, 3) arranged at a distance (a) from one another on the carrier element (1), wherein the distance (a) of the supporting elements (2, 3) from one another is variable for setting a reference length, also comprising a measuring unit (4) for detecting a deviation of a linear dimension of the workpiece from a preset reference length, wherein at least part of the carrier element (1) is produced from a carbon-fibre-reinforced plastic; **characterized in that** the supporting elements (2, 3) have bearing elements (7), which are in the form of pins and are arranged in pairs in parallel alignment with respect to the longitudinal axis (A) of the carrier element (1) on at least one supporting element (2, 3); wherein the bearing elements (7) are designed to bear against a planar end face of the workpiece when the measuring device is placed onto the workpiece; and wherein at least one supporting element (2, 3) has a contact element (5), which can be set against an outer or inner circumferential surface of the workpiece and is designed for making contact with the workpiece at a single point.

2. Measuring device according to Claim 1,
**characterized in that** the part of the carrier element (1) produced from carbon-fibre-reinforced plastic is of a tubular form.

3. Measuring device according to Claim 1 or 2,
**characterized in that** at least one supporting element (2, 3) arranged on the carrier element (1) is displaceable along a longitudinal axis (A) of the carrier element (1).

4. Measuring device according to one of the preceding claims,
**characterized in that** a further contact element (6) that can be set against the workpiece is a component part of the measuring unit (4), wherein the measuring unit (4) is preferably releasably connected to a supporting element (2).

5. Measuring device according to one of the preceding claims,
**characterized in that** a handle (8) is formed on the carrier element (1), preferably is releasably connected to the carrier element (1).

6. Use of a measuring device according to one of the preceding claims for testing the dimensional stability of an outside or inside diameter of a cylindrical or hollow-cylindrical workpiece, wherein the outside or inside diameter of the workpiece is preferably between 350 mm and 3500 mm, more preferably between 400 mm and 3000 mm.

7. Measuring method for testing the dimensional stability of a cylindrical or hollow-cylindrical workpiece by using a measuring device according to one of Claims 1 to 5, wherein the method comprises the following steps:
- placing the measuring device onto the workpiece, so that the bearing elements (7) of the supporting elements (2, 3) bear against a planar end face of the workpiece,
- setting a contact element (5) of a supporting element (2, 3) against an outer or inner circumferential surface of the workpiece by displacing the measuring device in the bearing plane,
- aligning the longitudinal axis (A) of the carrier element (1) with the outside or inside diameter of the workpiece by pivoting the measuring device within the bearing plane about the set-against contact point until the longitudinal axis (A) of the carrier element (1) is made to coincide with the outside or inside diameter of the workpiece,
- detecting a deviation of the outside or inside diameter from a preset reference length by means of the measuring unit.

8. Measuring method according to Claim 7,
**characterized in that** the measuring unit of the measuring device is set in advance to a reference length.

## Revendications

1. Dispositif de mesure destiné à vérifier le respect des cotes d'une pièce, comprenant un élément de support (1) avec un axe longitudinal (A) ainsi qu'au moins deux éléments de soutien (2, 3) disposés l'un par rapport à l'autre à une distance (a) sur l'élément de support (1), la distance (a) des éléments de soutien (2, 3) l'un par rapport à l'autre pouvant être modifiée pour faire varier une longueur de référence, comprenant en outre une unité de mesure (4) pour déterminer un écart d'une dimension en longueur de la pièce par rapport à une longueur de référence préajustée, au moins une partie de l'élément de support (1) étant fabriquée à partir d'un plastique renforcé par des fibres de carbone ; **caractérisé en ce que** les éléments de soutien (2, 3) présentent des éléments d'appui (7) qui sont en forme de broche et qui sont disposés par paires suivant une orientation parallèle à l'axe longitudinal (A) de l'élément de support (1) au niveau d'au moins un élément de soutien (2, 3) ;
les éléments d'appui (7) étant réalisés de manière à reposer sur une surface frontale plane de la pièce lorsque le dispositif de mesure est posé sur la pièce ; et au moins un élément de soutien (2, 3) présentant un élément de contact (5) pouvant être appliqué contre une surface périphérique extérieure ou intérieure de la pièce, lequel est réalisé pour venir en contact ponctuel avec la pièce.

2. Dispositif de mesure selon la revendication 1,
**caractérisé en ce que** la partie de l'élément de support (1) fabriquée en plastique renforcé par des fibres de carbone est réalisée sous forme tubulaire.

3. Dispositif de mesure selon la revendication 1 ou 2,
**caractérisé en ce qu'**au moins un élément de soutien (2, 3) disposé sur l'élément de support (1) peut être coulissé le long d'un axe longitudinal (A) de l'élément de support (1).

4. Dispositif de mesure selon l'une quelconque des revendications précédentes,
**caractérisé en ce qu'**un élément de contact supplémentaire (6) pouvant être appliqué contre la pièce fait partie de l'unité de mesure (4), l'unité de mesure (4) étant de préférence connectée de manière amovible à un élément de soutien (2).

5. Dispositif de mesure selon l'une quelconque des revendications précédentes,
**caractérisé en ce qu'**une poignée de retenue (8) est réalisée au niveau de l'élément de support (1), laquelle est de préférence connectée de manière amovible à l'élément de support (1).

6. Utilisation d'un dispositif de mesure selon l'une quelconque des revendications précédentes pour contrôler le respect des cotes d'un diamètre extérieur ou intérieur d'une pièce cylindrique ou cylindrique creuse, le diamètre extérieur ou intérieur de la pièce étant de préférence compris entre 350 mm et 3500 mm, plus préférablement entre 400 mm et 3000 mm.

7. Procédé de mesure pour contrôler le respect des cotes d'une pièce cylindrique ou cylindrique creuse en utilisant un dispositif de mesure selon l'une quelconque des revendications 1 à 5,
le procédé comprenant les étapes suivantes :
- positionnement du dispositif de mesure sur la pièce de telle sorte que les éléments d'appui (7) des éléments de soutien (2, 3) reposent sur une surface frontale plane de la pièce,
- application d'un élément de contact (5) d'un élément de soutien (2, 3) contre une surface périphérique extérieure ou intérieure de la pièce par coulissement du dispositif de mesure dans le plan de pose,
- orientation de l'axe longitudinal (A) de l'élément de support (1) sur le diamètre extérieur ou intérieur de la pièce par pivotement du dispositif de mesure à l'intérieur du plan de pose autour du point de contact appliqué jusqu'à ce que l'axe longitudinal (A) de l'élément de support (1) soit amené en coïncidence avec le diamètre extérieur ou intérieur de la pièce,
- détection d'un écart entre le diamètre extérieur ou intérieur et une longueur de référence préajustée au moyen de l'unité de mesure.

8. Procédé de mesure selon la revendication 7,
**caractérisé en ce que** l'unité de mesure du dispositif de mesure est préalablement ajustée à une longueur de référence.
